Europäisches Patentamt

European Patent Office

Office européen des brevets

(11) Veröffentlichungsnummer: **0 282 827**

**A2**

# EUROPÄISCHE PATENTANMELDUNG

(21) Anmeldenummer: 88103238.7

(22) Anmeldetag: 03.03.88

(51) Int. Cl.⁴: **C08F 8/50** , C08F 2/52

(30) Priorität: 14.03.87 DE 3708392
08.09.87 DE 3730065

(43) Veröffentlichungstag der Anmeldung:
21.09.88 Patentblatt 88/38

(84) Benannte Vertragsstaaten:
BE DE FR GB IT NL SE

(71) Anmelder: BAYER AG
Konzernverwaltung RP Patentabteilung
D-5090 Leverkusen 1 Bayerwerk(DE)

(72) Erfinder: Fitzky, Hans Georg, Dr.
Kolpingstrasse 7
D-5068 Odenthal(DE)
Erfinder: Storp, Siegfried, Dr.
Leopold-Gmelin Strasse 17
D-5000 Köln 80(DE)

(54) **Verfahren zur Plasmapolymerisation von Polymeren unter Verwendung polymerer Ausgangsprodukte.**

(57) Die Erfindung betrifft ein Verfahren zur Plasmapolymerisation von Polymeren unter Verwendung polymerer Ausgangsprodukte.

EP 0 282 827 A2

## Verfahren zur Plasmapolymerisation von Polymeren unter Verwendung polymerer Ausgangsprodukte

Die Erfindung betrifft ein Verfahren zur Plasmapolymerisation von Polymeren unter Verwendung polymerer Ausgangsprodukte.

Durch Niederdruck-Plasmapolymerisation werden ausgehend von gasförmigen Monomeren auf einem Substrat Polymere hergestellt. Das Verfahren erlaubt die Herstellung dünner, gleichmäßiger und porenfreier Schichten, insbesondere auch aus Monomeren, die sonst nicht polymerisierbar sind.

Zur Erzeugung der Niederdruckplasmen werden im allgemeinen hochfrequente Entladungen bei Drucken von 0,05 bis ca. 5 mbar und mit Frequenzen von ca. 0,01 bis 27 MHz eingesetzt (z.B. Techniques and Applications of Plasma Chemistry, J.R. Hollahan, A.T. Bell, J. Wiley & Sons, New York 1974). Neuere Verfahren verwenden z.T. Frequenzen im Mikrowellenbereich, vorzugsweise 2,45 GHz (z.B. DE-OS 31 47 986). Höhere Frequenzen bieten besonders die Möglichkeit, die Energie elektrodenlos in den Plasmareaktor einzukoppeln. Auf diese Weise können unerwünschte chemische Reaktionen der Plasmateilchen mit den Metallelektroden vermieden werden.

Mittels Plasmapolymerisation werden organische Polymerfilme auf verschiedenen Substraten dadurch erzeugt, daß Monomere in einem elektrischen Gasplasma aktiviert werden, bevor sie auf der Substratoberfläche polymerisieren. Bei der Herstellung von Plasmapolymerisaten aus Monomeren können in die Schichten im stärkeren Umfange ungesättigte, vernetzte Strukturen und Radikale eingebaut werden. Letztere können z.B. beim Zutritt von Luft mit Sauerstoff reagieren, was zu einer weiteren Veränderung der Schichteigenschaften führt. Zur Stabilisierung von Plasmapolymerisaten können daher Temperungen während und nach der Plasmapolymerisation, z.B. unter Inertgas oder Reaktivgasen ausgeführt werden.

Weiterhin ist bekannt, daß durch die Beschränkung der wirksamen Feldstärke im Bereich des Substrats eine Verbesserung der Stöchiometrie von Kohlenwasserstoff-(CH-) und fluorierten Kohlenwasserstoff-(CF-)Polymeren erreicht werden kann. Die Elektronenenergie wird so weit begrenzt, daß nur C-C, nicht aber C-H und C-F-Bindungen gespalten werden.

Aufgabe der Erfindung war es, ein Verfahren zu entwickeln, bei dem ohne Nachbehandlung Plasmapolymerisate mit guter Stöchiometrie erzeugt werden, wobei polymere Ausgangsprodukte eingesetzt werden. Diese werden in der Plasmaphase depolymerisiert (oligomerisiert) und auf dem Substrat mit einer dem eingesetzten Polymeren ähnlichen Stöchiometrie niedergeschlagen.

Gegenstand der Erfindung ist ein Verfahren zur Herstellung von Polymerisaten, gekennzeichnet durch Depolymerisation von polymeren Ausgangsstoffen mittels einer Hochfrequenz-oder Mikrowellen-Niederdruck-Plasmaentladung im Inertgasstrom durch Elektronen-oder Ionenstoß zu Oligomeren, die dann, unterstützt durch dielektrische Erwärmung, in die Gasphase übergeführt werden und dann auf einem Substrat repolymerisieren.

Als polymere, vorzugsweise hochtemperaturbeständige (bis 400°C) Ausgangssubstanzen können im erfindungsgemäßen Verfahren halogenierte Polymere eingesetzt werden, z.B. fluorierte Kohlenwasserstoffe z.B. nach DIN 7728 (CF-Polymere) wie Polytetrafluorethylen (PFTE) z.B. nach DIN 7728, Tetrafluorethylen-Hexafluorpropylen-Copolymer (FEP), Polyvinylidenfluorid (PVDF), Perfluoralkoxyalkan (PFA), Copolymer aus Tetrafluorethylen und Perfluormethylvinylether (Kalrez® Dupont, 40/60 Copolymer).

Weiterhin können andere Polymere, z.B. nicht halogenierte Polymere wie Polysiloxane, Polyphenylenoxide (PPO), Polyphenylensulfide (PPS) u.s.w. im erfindungsgemäßen Verfahren eingesetzt werden.

Bei der Durchführung des erfindungsgemäßen Verfahrens werden feste Ausgangspolymere in einem Plasmareaktor durch ein Gasplasma aus einem Inertgas, z.B. einem Edelgas wie Argon zu repolymerisierbaren Oligomeren abgebaut (Depolymerisation), welche nach der Aktivierung auf der Oberfläche des Ausgangspolymeren und in der Plasmaphase auf dem Substrat wieder zu einem hochpolymeren Plasmapolymerisat abreagieren. Die gute Übertragung aktivierter Oligomerer ist dabei von der durch die Energiedichte der Plasmaentladung gesteuerten Temperatur des Ausgangspolymers abhängig.

Beim erfindungsgemäßen Verfahren kann eine unerwünschte Abspaltung von H-oder F-Atomen fast ganz unterdrückt werden. So kann bei dem Aufbau von Plasmapolymerisaten aus aktivierten Oligomeren mit einer wesentlich geringeren Konzentration radikalischer Zentren gearbeitet werden, was sich z.B. in einem sehr geringen Sauerstoffgehalt des Polymers nach Exposition an Luft bemerkbar macht.

Während der Plasmaentladung können die Partikel aus dem Polymeren auf Temperaturen von 100 bis 400°C aufgeheizt werden.

Als Reaktor dient vorzugsweise ein auf 2,45 GHz abgestimmter Mikrowellen-Hohlraumresonator der im $E_{010}$-Feldtyp betrieben wird und der in axialer Richtung von einem Quarzrohr von 5 cm Durchmesser und ca.

10 cm Länge durchsetzt wird, innerhalb dessen die Plasmaentladung brennt. Das polymere Ausgangsmaterial befindet sich innerhalb des Plasmareaktors, der in Richtung auf das zu beschichtende Substrat von einem Inertgasstrom durchflossen wird, der den Transport der aktivierten Oligomere bewirkt. Die Plasmaentladung wird durch Edelgase wie Helium, Argon oder Neon bei Drucken von 0,01 bis 10 mbar aufrechterhalten.

Durch das erfindungsgemäße Verfahren können Oberflächen mit einer dünnen Polymerschicht gleichmäßig überzogen werden, z.B. können Bänder für magnetische Aufzeichnungen kontinuierlich mit einer Schutzschicht aus Polymeren überzogen werden. Weiterhin ist es möglich Formkörper, z.B. Platten und Scheiben, mit einer Schicht aus Polymeren zu überziehen.

Beispiele

Bei dem erfindungsgemäßen Verfahren wird als Beispiel für eine kontinuierliche Beschichtung Polytetrafluorethylen (PTFE-Schicht, CF-Polymer) auf einem metallbeschichteten Polyesterband abgeschieden. So kann auf dem Substrat eine Gleit-und Korrosionsschutz-Schicht auf einer magnetischen Aufzeichnungsschicht erzeugt werden (z.B. DE-OS 3339245).

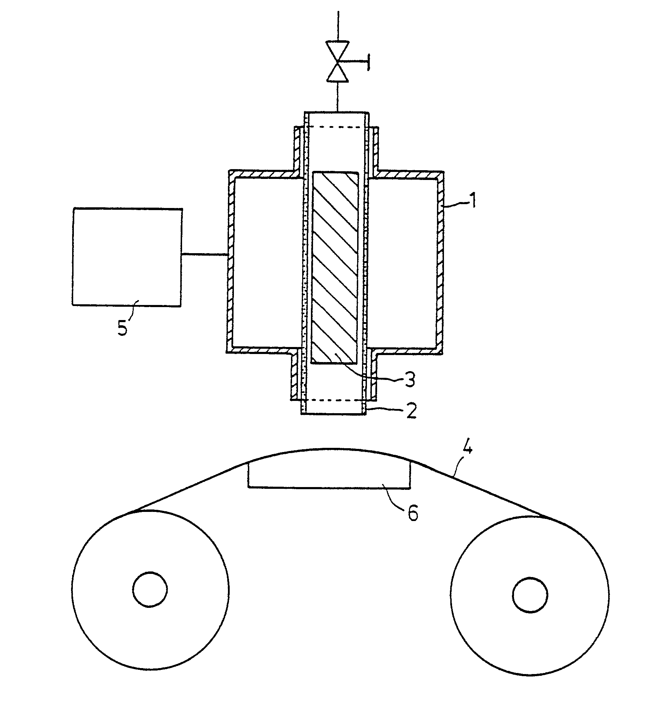

Die Anordnung zur Beschichtung von Bändern besteht aus einem Plasmareaktor zur Erzeugung von aktivierten CF-Oligomeren und der extern angeordneten Einrichtung für den Bandtransport wie in der Abb. 1 dargestellt. Die Plasma-Entladung brennt in einem Mikrowellenresonator 1, der mit einem $E_{010}$ Feldtyp betrieben wird, innerhalb eines Quarzrohres 2 von 50 mm Durchmesser, das von oben nach unten von einem Argonstrom durchflossen wird.

Das feste polymere Ausgangsprodukt befindet sich in Form eines Stabes oder einer Folie 3 innerhalb des Quarzrohres 2. Stäbe (Rohre) von 10 bis 20 mm $\emptyset$ oder Folien von 0,5 mm Stärke und 45 x 200 mm Fläche sind achsenparallel im Quarzrohr zentriert und überdecken den gesamten Bereich der Plasmaentladung.

Polymere Ausgangsprodukte mit höheren dielektrischen Verlusten oder niedrig schmelzende Thermoplaste werden vorzugsweise im Bereich niedrigerer Energiedichte der Plasmaentladung am Ausgang des Plasmareaktors angeordnet.

Der Abtrag des Polymeren in der Plasmaphase erfolgt bevorzugt an Stellen höchster elektrischer Feldstärke (Zylinderachse des $E_{010}$-Resonators).

Die aktivierten Oligomeren verlassen den Plasmareaktor nach unter in Richtung auf das zu beschichtende Substrat 4. Das Substrat (z.B. metallisiertes Polyesterband) läuft über einen schwach konvex - gekrümmten Temperiertisch 6 gegenüber der Mündung des Quarzrohres 2.

Der Abstand des Substrats zur Mündung des Quarzrohres ist variabel. Bevorzugt ist ein Abstand, der eine Erstreckung des Gasplasmas bei gegebenem Gasdruck bis auf die Oberfläche des Substrats gewährleistet. Kleine Abstände ergeben eine hohe Abscheiderate und eine gute Haftung auf der Unterlage.

Die Plasmaentladung wird mit einer Mikrowellenfrequenz von 10 bis 3000 MHz, vorzugsweise von 2,45 GHz betrieben. Die Leistung des Generators 5 beträgt 100 bis 500 W.

Typische Verfahrensparameter z.B. bei der PTFE-Beschichtung von Bändern sind Inertgas-Drucke von 0,1 bis 0,3 mbar (z.B. mit Argon) bei einem Durchsatz von 10 bis 30 Standard-Kubikzentimetern pro Minute ( = Volumen bei Normaldruck 1000 mbar) und eine Mikrowellenleistung von 500 W.

Die erforderliche Erwärmung des Ausgangspolymers erfolgt mit einer Verzögerung von wenigen Minuten. Der parallel dazu verlaufende Anstieg der Oligomer-Aktivierung ergibt sich rein optisch aus der Veränderung der spektralen Emission des Plasmas. Die anfänglich schwache Farbe, die von den Ionen ausgeht (z.B. rosa bei Einsatz von Argon), wandelt sich dann z.B. in ein grünstichiges intensives Weiß bei Herstellung von CF-Oligomeren.

Die Abscheiderate auf dem Substrat erreicht Werte von 200 bis 800 Å Dicke/Minute. Dünnere Schichten auf Metall oder Kunststoffunterlage zeigen die Interferenzen dünner Blättchen. Dickere Schichten bis zu 10 $\mu$m sind vollkommen farblos und zeigen eine sehr gute Transparenz.

Die Zusammensetzung der gebildeten Schichten wurde mit ESCA (Elektronenspektroskopie zur chemischen Analyse $\triangleq$ XPS) geprüft. Im Übersichtsspektrum einer typischen Schicht sind überwiegend Fluor und Kohlenstoff vertreten. Die Sauerstoff-und Stickstoffkonzentrationen sind vernachlässigbar gering (bestimmt durch quantiative Analyse in AT%). Das F:C-Atomverhältnis beträgt 1.5:1. Die Kohlenstoff-C1s-Photoelektronenlinie wurde durch mathematische Dekonvolution in die verschiedenen Bindungszustände des Kohlenstoffs zerlegt. Aufgrund der gemessenen Bindungsenergien ist eine Unterscheidung folgender Bindungstypen möglich:

1. $C$-$F_3$-Bindungen bei 293.7 eV,

2. ($\underline{C}$-F$_2$)$_n$-Bindungen bei 292.0 eV,
3. $\underline{C}$-F$_2$-R-Bindungen bei 290.7 eV,
4. $\underline{C}$ = C-F-bzw. $\underline{C}$-H-F-C-F$_2$-Bindungen bei 288.9 eV,
5. C-C-F-bzw. $\underline{C}$-H-F-C-H$_2$-Bindungen bei 286.9 eV.

C-C-und C-H-Bindungen (284.6 eV) sind nicht nachzuweisen. Den Intensitätsverhältnissen kann entnommen werden, daß überwiegend (C-F$_2$)$_n$-Bindungen erzeugt werden. Es kann gezeigt werden, daß praktisch keine Radikale in die Schicht eingebaut werden.

Die Zusammensetzung der Oberfläche des Ausgangspolymers entspricht auch nach intensivem Abbau im Plasma reinem (C-F$_2$)$_n$ (F:C-Atomzahlverhältnis 2:1).

Die Dicke der abgeschiedenen Schichten kann z.B. an Tieftemperaturbrücken rasterelektronenmikroskopisch bestimmt werden. Experimentell können bei einer kontinuierlichen Beschichtung bei einem Vorschub von 7 cm/min bei der erfindungsgemäßen Verfahrensweise Schichtdicken auf dem Substrat von 0,8 μm erhalten werden. Bei ruhendem Band können bei ähnlichen Entladungsbedingungen in 10 min Schichtdicken von 1,5 μm erzeugt werden. Ein Dauertest von 1 h ergibt Schichtdicken von etwa 10 μm. Die Schichten sind gleichmäßig in der Schichtdicke und frei von Einschlüssen und größeren Poren.

In einem 2. Beispiel wird ein CF-Polymer auf dem Substrat, metallisiertes Polyesterband, dadurch erzeugt, daß als polymeres Ausgangsprodukt FEP (Tetrafluorethylen-Hexafluorpropylen-Polymer nach DIN 7728) dient. Das Target-Material befindet sich in Form einer 1 mm starken Folie 3 von 45 x 200 mm Größe innerhalb des Quarzrohres 2 des Mikrowellenresonators 1 (Abb. 1). Bei einer Mikrowellenleistung von 500W und bei einem Argondruck von 0,12 mbar und einem Durchsatz von 10 Standard-Kubikzentimeter pro Minute wurde eine Abscheiderate von 50-100 Å/s auf dem Substrat erzielt.

In einem dritten Beispiel wurde ein CF-Polymer auf dem Substrat erzeugt, wobei als polymeres Ausgangsprodukt PVDF (Polyvinylidenfluorid) dient. Das Material wurde in Form zweier Stäbe von 5 x 10 mm Querschnitt und 200 mm Länge auf der Achse des Quarzrohres 2 im Mikrowellenresonator 1 eingesetzt. Bei einem Argondruck von 0,15 mbar und einer Mikrowellenleistung von ca. 200 W wurde eine Abscheiderate von 20-50 Å/s erzielt.

Die Charkterisierung der Plasmapolymerisate durch ESCA-Messungen ergab für die drei Beispiele forgende Schichtzusammensetzungen (Werte für das Ausgangspolymer in Klammern):

| Ausgangspolymer | | | | Plasmapolymer | |
|---|---|---|---|---|---|
| PTFE | 39,22 Atom-% C | 0,54 % O | 59,98 % F | | |
| | (33,43) | (0,14) | (66,43) | | |
| FEP | 39,58 % C | 0,27 % O | 60,15 % F | | |
| | (33,4) | (0,1) | (66,6) | | |
| PVDF | 65,59 % C | 3,52 % O | 30,88 % F | | |
| | (51,69) | (0,3) | (48) | | |

## Ansprüche

1. Verfahren zur Herstellung von Polymerisaten, dadurch gekennzeichnet, daß durch Depolymerisation von polymeren Ausgangsstoffen mittels einer Hochfrequenz-oder Mikrowellen-Niederdruck-Plasmaentladung im Inertgasstrom durch Elektronen-oder Ionenstoß Oligomere hergestellt werden, die dann, unterstützt durch dielektrische Erwärmung, in die Gasphase übergeführt werden und dann gegebenenfalls auf einem Substrat repolymerisieren können.

2. Verfahren nach Anspruch 1, dadurch gekennzeichnet, daß die Plasmaentladung bei Frequenzen von 10 bis 3000 MHz, vorzugsweise bei 2450 MHz betrieben wird.

3. Verfahren nach Anspruch 1, dadurch gekennzeichnet, daß zur Aufrechterhaltung der Plasmaentladung Inertgase, vorzugsweise Edelgase wie Argon oder Helium bei Drucken von 0,01 bis 10 mbar verwendet werden.

4. Verfahren nach Anspruch 1, dadurch gekennzeichnet, daß als polymere Ausgangssubstanzen perfluorierte oder teilfluorierte Polymere wie PTFE, FEP, PFA, Kalrez oder PVDF verwendet werden.

5. Verfahren nach Anspruch 1 bis 4, dadurch gekennzeichnet, daß nicht halogenierte Polymere wie Polysiloxane, PPS und insbesondere hochtemperaturbeständige Polymere verwendet werden.

6. Verfahren nach Anspruch 1, dadurch gekennzeichnet, daß die polymeren Ausgangsmaterialien durch dielektrische Erwärmung auf Temperaturen bis zu 400°C erwärmt werden.